# EUROPEAN PATENT APPLICATION

(11) **EP 4 333 446 A1**
(43) Date of publication of application: **06.03.2024**
(21) Application number: 22275120.8
(22) Date of filing: 30.08.2022
(51) Int. Cl.: H04N 23/61, G06V 20/52, H04N 7/18

(54) **CONTROL OF USER DEVICE BASED ON DETECTING AN EVENT OF INTEREST**

(71) Applicant: Nokia Technologies Oy, 02610 Espoo (FI)
(72) Inventor: VAN DEN BROECK, Marc, 2860 Sint-Katelijne-Waver (BE); RADIVOJEVIC, Zoran, Cambridge, CB3 0FA (GB)
(74) Representative: Sayer, Robert David

(57) **Abstract**

An apparatus and method is described relating to control of a user device based on detecting an event of interest. The apparatus may comprise means for receiving video data representing a series of frames captured by a camera of, or associated with, a user device. The apparatus may also comprise means for identifying an event of interest in the video data based on: detecting, for at least one of the frames, one or more predetermined visual and/or audio elements associated with use of a real-world object, and detecting a predetermined force and/or motion of the user device synchronised with the capture of the at least one frame, the predetermined motion being associated with use of the real-world object. The apparatus may also comprise means for controlling the user device to prevent transmission of, and/or tagging, at least some of the video data responsive to identifying the event of interest.

## Description

### Field

Example embodiments relate to an apparatus, method and computer program for controlling a user device based on detecting an event of interest

### Background

Some user devices may comprise one or more cameras for capturing video content and one or more microphones for capturing audio content that accompanies the video content. Example user devices include mobile devices such as smartphones, tablet computers and wearable devices such as body-worn camera units. The captured video and audio content may be stored as one or more video files on one or more memory units of the user device. The captured video and audio content may additionally, or alternatively, be live-streamed to one or more remote user devices, the users of which may view a live or near-live feed of what is being captured by the user device.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, this specification describes an apparatus, comprising means forreceiving video data representing a series of frames captured by a camera of, or associated with, a user device; identifying an event of interest in the video data based on: detecting, for at least one of the frames, one or more predetermined visual and/or audio elements associated with use of a real-world object, and detecting a predetermined force and/or motion of the user device synchronised with the capture of the at least one frame, the predetermined force and/or motion being associated with use of the real-world object; and controlling the user device to prevent transmission of, and/or to tag, at least some of the video data responsive to identifying the event of interest.

The one or more predetermined visual and/or audio elements may be associated with use of a firearm and the predetermined motion of the user device may correspond to a recoil motion of the firearm when fired.

The one or more predetermined visual elements may represent one or more of: at least part of a firearm; a flash or explosion; and one or more people running.

The one or more predetermined visual elements may comprise a representation of at least part of a rear view of a firearm.

The one or more predetermined visual elements may comprise a representation of one or more people running at above a predetermined speed over a plurality of the frames and/or in respective directions away from a position of the user device.

The one or more predetermined audio elements may represent a sound or sounds associated with one or more of: a firing sound of a firearm; and speech or vocal sounds having one or more characteristics indicative of distress.

The one or more predetermined audio elements may comprise a representation of a sound or sounds associated with speech or vocal sounds having an above-threshold amplitude and/or pitch.

The one or more predetermined audio elements may comprise a representation of a sound or sounds associated with speech or vocal sounds which transition, over a plurality of the frames, from a baseline amplitude and/or pitch to the above-threshold amplitude and/or pitch relative to the baseline.

The one or more predetermined audio elements may comprise a representation of a sound or sounds associated with speech that includes one or more predetermined words indicative of distress.

The apparatus may further comprise one or more machine-learned models for receiving the video data and for processing the video data to detect the one or more predetermined visual and/or audio elements associated with use of a real-world object.

The means for detecting the predetermined force and/or motion of the user device may be configured to receive motion data from an inertial measurement unit of the user device.

The controlling means may be configured to prevent transmission of at least some of the video data by one or more of: deactivating the camera of the user device; deactivating an image encoding function of the user device; deactivating a data transmission function of the user device; or obfuscating or scrambling at least some of the video data which includes the event of interest.

The apparatus may be configured to live-stream the video data to one or more remote devices using a real-time streaming protocol and the controlling means is configured to prevent transmission of at least some of the video data by stopping or pausing the live-stream.

At least the identifying and controlling means may comprise at least part of an embedded system of the user device which is configured to activate responsive to activation of the camera.

The apparatus may comprise the user device.

According to a second aspect, this specification describes a method, comprising: receiving video data representing a series of frames captured by a camera of, or associated with, a user device; identifying an event of interest in the video data based on: detecting, for at least one of the frames, one or more predetermined visual and/or audio elements associated with use of a real-world object, and detecting a predetermined force and/or motion of the user device synchronised with the capture of the at least one frame, the predetermined motion being associated with use of the real-world object; and controlling the user device to prevent transmission of, and/or tagging, at least some of the video data responsive to identifying the event of interest.

The one or more predetermined visual and/or audio elements may be associated with use of a firearm and the predetermined motion of the user device may correspond to a recoil motion of the firearm when fired.

The one or more predetermined visual elements may represent one or more of: at least part of a firearm; a flash or explosion; and one or more people running.

The one or more predetermined visual elements may comprise a representation of at least part of a rear view of a firearm.

The one or more predetermined visual elements may comprise a representation of one or more people running at above a predetermined speed over a plurality of the frames and/or in respective directions away from a position of the user device.

The one or more predetermined audio elements may represent a sound or sounds associated with one or more of: a firing sound of a firearm; and speech or vocal sounds having one or more characteristics indicative of distress.

The one or more predetermined audio elements may comprise a representation of a sound or sounds associated with speech or vocal sounds having an above-threshold amplitude and/or pitch.

The one or more predetermined audio elements may comprise a representation of a sound or sounds associated with speech or vocal sounds which transition, over a plurality of the frames, from a baseline amplitude and/or pitch to the above-threshold amplitude and/or pitch relative to the baseline.

The one or more predetermined audio elements may comprise a representation of a sound or sounds associated with speech that includes one or more predetermined words indicative of distress.

The method may further comprise using one or more machine-learned models for receiving the video data and for processing the video data to detect the one or more predetermined visual and/or audio elements associated with use of a real-world object.

Detecting the predetermined force and/or motion of the user device may comprise receiving motion data from an inertial measurement unit of the user device.

The controlling may prevent transmission of at least some of the video data by one or more of: deactivating the camera of the user device; deactivating an image encoding function of the user device; deactivating a data transmission function of the user device; or obfuscating or scrambling at least some of the video data which includes the event of interest.

The method may comprise live-streaming the video data to one or more remote devices using a real-time streaming protocol and the controlling may prevent transmission of at least some of the video data by stopping or pausing the live-stream.

At least the identifying and controlling may be performed by at least part of an embedded system of the user device which is configured to activate responsive to activation of the camera.

The apparatus may comprise the user device.

According to a third aspect, this specification describes a computer program comprising instructions for causing an apparatus to perform at least the following: receiving video data representing a series of frames captured by a camera of, or associated with, a user device; identifying an event of interest in the video data based on: detecting, for at least one of the frames, one or more predetermined visual and/or audio elements associated with use of a real-world object, and detecting a predetermined force and/or motion of the user device synchronised with the capture of the at least one frame, the predetermined motion being associated with use of the real-world object; and controlling the user device to prevent transmission of, and/or tagging, at least some of the video data responsive to identifying the event of interest.

According to a fourth aspect, this specification describes a computer-readable medium (such as a non-transitory computer-readable medium) comprising program instructions stored thereon for performing at least the following: receiving video data representing a series of frames captured by a camera of, or associated with, a user device; identifying an event of interest in the video data based on: detecting, for at least one of the frames, one or more predetermined visual and/or audio elements associated with use of a real-world object, and detecting a predetermined force and/or motion of the user device synchronised with the capture of the at least one frame, the predetermined motion being associated with use of the real-world object; and controlling the user device to prevent transmission of, and/or tagging, at least some of the video data responsive to identifying the event of interest..

According to a fifth aspect, this specification describes an apparatus comprising: at least one processor; and at least one memory including computer program code which, when executed by the at least one processor, causes the apparatus to: receive video data representing a series of frames captured by a camera of, or associated with, a user device; identify an event of interest in the video data based on: detecting, for at least one of the frames, one or more predetermined visual and/or audio elements associated with use of a real-world object, and detecting a predetermined force and/or motion of the user device synchronised with the capture of the at least one frame, the predetermined motion being associated with use of the real-world object; and control the user device to prevent transmission of, and/or tagging, at least some of the video data responsive to identifying the event of interest.

### Drawings

Embodiments will be described, by way of non-limiting example, with reference to the accompanying drawings as follows.

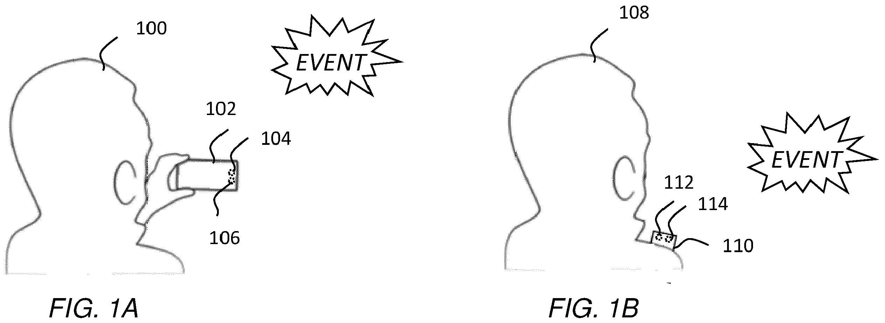

FIG. 1A is a perspective view of a user operating a user device in a first scenario;
FIG. 1A is a perspective view of a user operating a user device in a second scenario;
FIG. 2 is a schematic view of an apparatus according to one or more example embodiments;
FIG. 3A is a flow diagram showing processing operations according to one or more example embodiments;
FIG. 3B is a flow diagram showing processing operations that may comprise a part of the

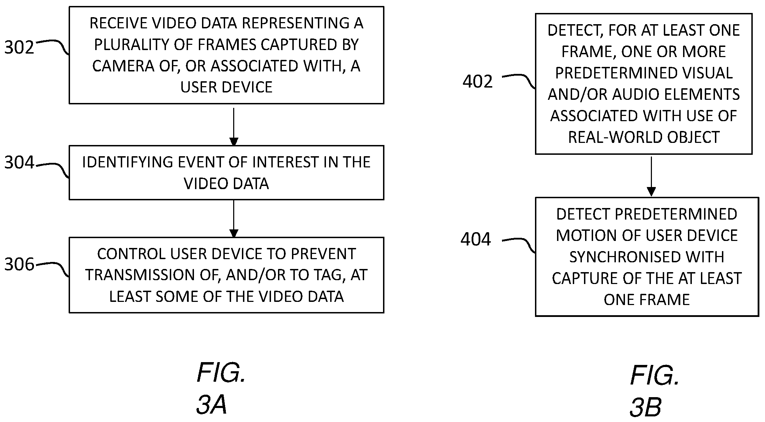

FIG. 3A processing operations according to one or more example embodiments;

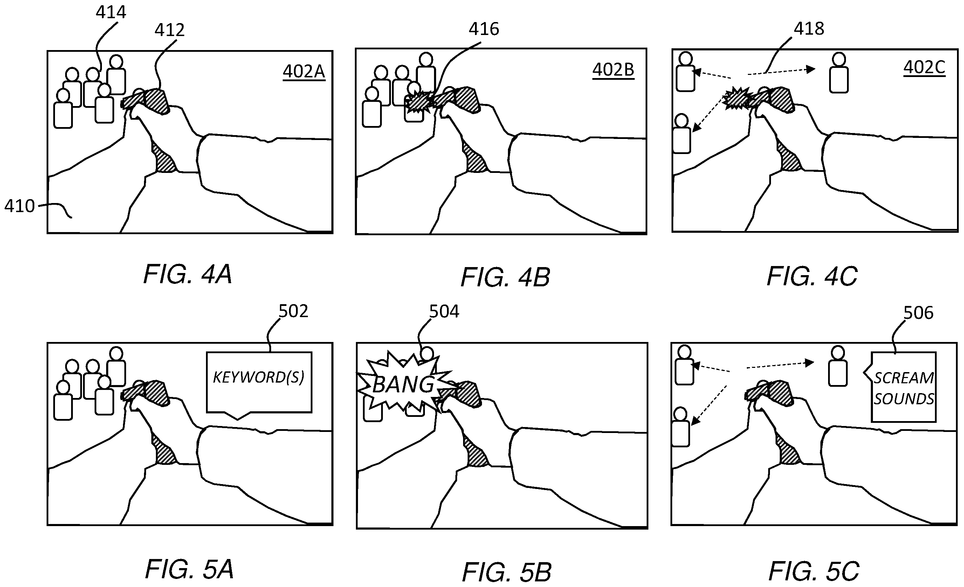

FIGs. 4A - 4C show respective first to third frames of a plurality of frames showing one or more visual elements;
FIGs. 5A - 5C show, with respect to the first to third frames in FIGs. 4A - 4C, one or more audio elements;

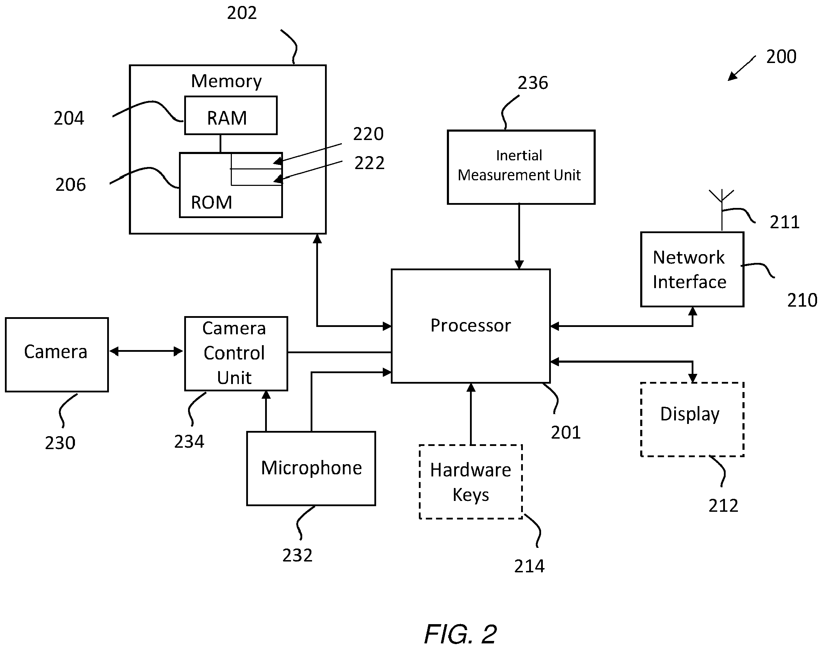

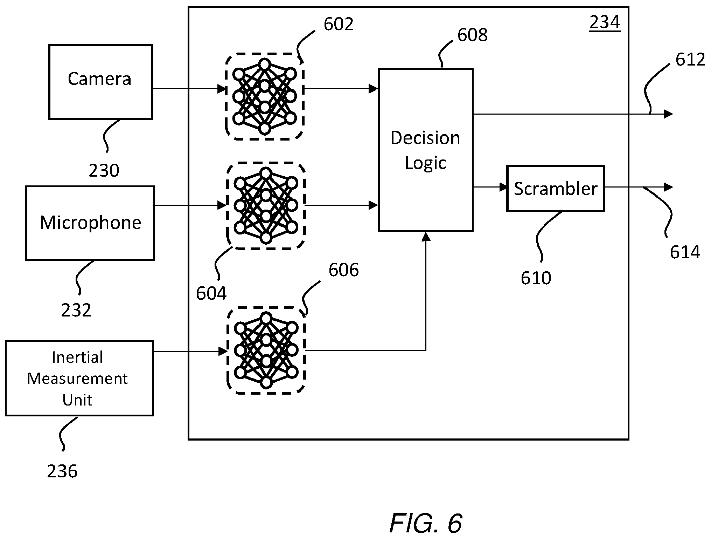

FIG. 6 is a schematic view of a camera control system which may be part of the FIG. 2 apparatus according to one or more example embodiments;

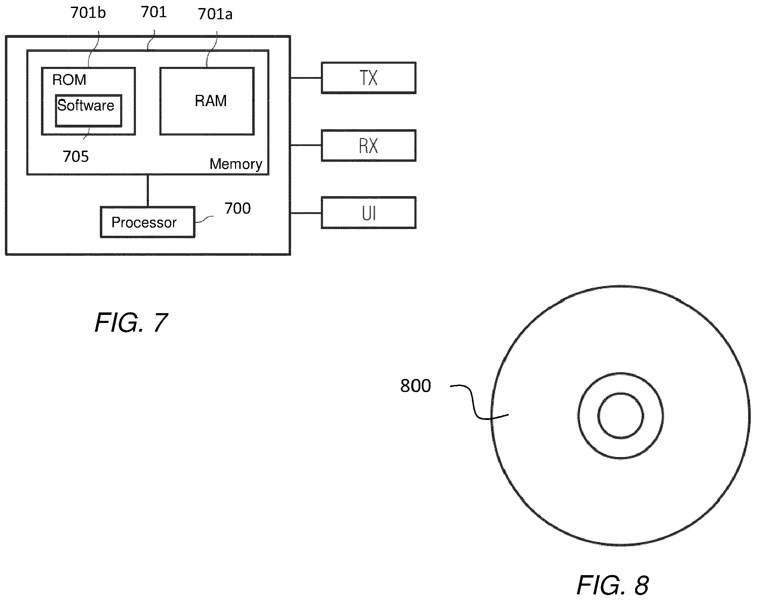

FIG. 7 is a schematic view of an apparatus according to one or more example embodiments; and
FIG. 8 is a plan view of a non-transitory medium for storing computer-readable instructions according to one or more example embodiments.

### Detailed Description

Example embodiments relate to an apparatus, method and computer program for controlling a user device based on detecting an event of interest in video data captured by a user device.

An event of interest may be any form of predetermined event type, for example one of concern to public safety or security. An event of interest may be one that involves use of a weapon, e.g. a firearm, although embodiments are not necessarily limited to events of this type. For example, embodiments may be applicable to other event types that involve use of a real-world object, which is usually accompanied by a known or predictable form of force and/or motion of said object.

It has unfortunately been the case that perpetrators of certain events, for example mass shootings, capture and live-stream (or otherwise record and share) a video of the event to other users. The perpetrator may carry a user device comprising one or more cameras and possibly one or more microphones as they carry-out the event. The user device may, for example, be a smartphone, tablet computer or wearable device such as a body-worn camera unit.

In the case of live-streaming, the perpetrator may establish a video streaming channel between their user device and a streaming server to which potentially many other users may be connected, or may connect to. The streaming server may be part of a social media platform. The video streaming channel may use a streaming protocol, for example the real-time streaming protocol (RTSP), or similar, which may use the real-time transport protocol (RTP) in conjunction with the real-time control protocol (RTCP). The other users may not be aware of what content is about to be streamed over the video streaming channel. There is therefore the potential for the other users to be highly disturbed by receiving and viewing video content depicting the event. This may also be detrimental to their mental health. It may also, in part, be a motivating factor for an attention-seeking perpetrator to carry-out the event.

Example embodiments relate to identifying an event of interest in received video data and controlling a user device in response to the identification. For example, this may be to prevent transmission of at least some of the video data. Examples of what is meant by "prevent transmission" will be explained below.

Example embodiments may alternatively, or additionally, involve controlling the user device to tag at least some of the video data responsive to the identification. Tagging video data may involve generating metadata. For context, the user device may be a body-worn camera device carried by a law-enforcement officer, among a team of such officers who may also be wearing body-worn camera devices. Identifying the event of interest may enable subsequent identification, by means of the tag in the video data, of which officer initiated the event of interest. This may be used for subsequent analysis. The tag may have an associated timestamp enabling determination of when the event of interest occurred in the video data timeline. This makes it possible for analysts or investigators to quickly locate the relevant time in the video data timeline. This makes analysis of video data from all officers more efficient, because analysts can immediately go to the relevant time in the different sets of video data.

As described herein, the term video data may describe data that represents a series of image frames captured by a camera. Additionally, and for ease of explanation, the term video data may also include audio data captured with the series of image frames via one or more microphones associated with usage of the camera. Both the image frames and accompanying audio data will usually be stored as a single file and/or may be streamed together, although possibly as distinct video and audio streams.

FIG. 1A is a view of a first user 100 carrying a first user device 102 which may be a smartphone. The first user device 102 may comprise one or more cameras 104 and one or more microphones 106. By use of an application on, or accessible to, the first user device 102, the first user 100 may capture video data representing image frames of an event occurring in a direction that the one or more cameras 104 point towards. The video data may also comprise audio data captured by the one or more microphones 106.

FIG. 1B is a view of the second user 108 carrying a second user device 110 in the form of a body-worn camera unit. The second user device 110 may similarly comprise one or more cameras 112 and one or more microphones 114 for capturing video data representing images of an event occurring in the direction that the one or more cameras 112 point towards. Again, the video data may also comprise audio data captured by the one or more microphones 114.

In FIGs. 1A and 1B, the first and second user devices 102, 110 may comprise wireless communications functionality (usually hardware and software/firmware) for transmission of the video data to one or more remote sources.

For example, the wireless communications functionality may comprise a Bluetooth or Zigbee transceiver, a WiFi (IEEE 802.11) transceiver or similar and/or radio access network (RAN) transceiver functionality which may utilize the 3G, 4G, 5G standards, or indeed any future RAN standard. It is by this wireless communications functionality that the first and second user devices 102, 110 may share the video data with others, for example over a video streaming channel.

FIG. 2 is a schematic view of an apparatus 200, which may comprise any of the first or second user devices 102, 110.

The apparatus 200 may have at least one processor 201 and at least one memory 202 closely-coupled to the at least one processor. One processor 201 and one memory 202 may be assumed for this example. The memory 202 may be comprised of a RAM 204 and ROM 206. The apparatus 200 may comprise a network interface 210, a display 212 and one or more hardware keys 214. The apparatus 200 may comprise one or more such network interfaces 210 for connection to a network, e.g. a RAN as mentioned above. The one or more network interfaces 210 may be for connection to the internet, e.g. using WiFi or similar. The one or more network interfaces may be connected to one or more antennas 211. The apparatus 200 may also comprise one or more cameras 230, one or more microphones 232 and a camera control unit 234, in this case interposed between the one or more cameras 230 and the processor 201 although other configurations are possible. The apparatus 200 may also comprise an inertial measurement unit (IMU) 236 which, as will be known, is a device that measures one or more of a force, angular rate and/or orientation of the apparatus using one or more of accelerometers, gyroscopes and possibly magnetometers. Data from the IMU 236 may therefore be used to detect a force and/or movement of the apparatus 200.

The processor 201 may be connected to at least some of the other components in order to control operation thereof.

The memory 202 may comprise a non-volatile memory, a hard disk drive (HDD) or a solid state drive (SSD). The ROM 206 of the memory 202 stores, amongst other things, an operating system 220 and may store one or more software applications 222. The RAM 204 of the memory 202 may be used by the processor 201 for the temporary storage of data. The operating system 220 may contain code which, when executed by the processor 201, implements certain operations.

One or more of the software applications 222 may comprise means for initiating operation of the one or more cameras 230 and the one or more microphones 232 for video capture. This may be by means of a camera application. One of the software applications 222 may comprise means for establishing a video streaming channel via a streaming server. This may be from within a social media application. Within such a software application may include an option to initiate operation of the one or more cameras 230 and one or more microphones 232 to enable what is being captured to be streamed in real-time or near real-time over the video streaming channel.

The processor 201 may take any suitable form. For instance, the processor 201 may be a microcontroller, plural microcontrollers, a microprocessor, or plural microprocessors and the processor may comprise processor circuitry.

Example embodiments relate to operations which may be performed, at least in part, by the camera control unit 234.

The camera control unit 234 may be, but is not necessarily, an embedded system of the apparatus 200.

That is, the camera control unit 234 may have dedicated functionality, to be described below, and maybe provided as a separate hardware unit to other components shown in FIG. 2. For this purpose, the camera control unit 234 may have at least one processor and at least one memory closely-coupled to the at least one processor. Similar to the processor 201, the processor may take any suitable form. Similar to the memory 202, the memory may take any suitable form and may be comprised of a RAM and ROM and may store software and/or firmware that, when executed by the processor of the camera control unit 234, performs operations to be described below with regard to FIGs. 3 and 4.

By use of an embedded system for the camera control unit 234, it is harder, if not impossible, for a user to bypass its operation, for example by modifying or downloading an alternative version of the operating system that runs on the processor 201.

Referring to FIG. 3A, a flow diagram shows processing operations that may be performed by the camera control unit 234. The operations maybe embodied in computer-readable code stored in a software application but may also be embodied in hardware or firmware, or a combination of the above types.

A first operation 302 may comprise receiving video data representing a series of frames captured by a camera of, or associated with, a user device.

A second operation 304 may comprise identifying an event of interest in the video data. As mentioned, an event of interest may comprise any event of a predetermined type. An event involving a firearm is given as a main example.

A third operation 306 may comprise controlling the user device to prevent transmission of, and/or to tag, at least some of the video data responsive to identifying the event of interest.

The operations may be performed by an apparatus comprising one or more means for performing the operations. The apparatus may be the user device.

Referring to FIG. 3B, a flow diagram showing processing sub-operations that may comprise the second operation 304 is shown.

A first sub-operation 402 may comprise detecting, for at least one of the frames, one or more predetermined visual and/or audio elements associated with use of a real-world object.

A second sub-operation 404 may comprise detecting a predetermined force or motion of the user device synchronised with the capture of the at least one frame, the predetermined force or motion being associated with use of the real-world object.

The first and second sub-operations 402, 404 of FIG. 3B may be performed in any order and possibly in parallel.

By "synchronised" it is meant that the detected predetermined force or motion of the user device occurs at the same time, or substantially the same time, as when the at least one frame comprising the predetermined visual and/or audio elements is captured. A small time lag of, say, 2 ms or thereabouts may be allowed for the detected force or motion which would still be considered "synchronised." This time lag may be a predetermined value, or may be adjusted by user action.

In some example embodiments, the one or more predetermined visual and/or audio elements may be associated with use of a firearm and the predetermined force or motion of the user device may correspond to a recoil force or motion of the firearm when fired.

In some example embodiments, the predetermined force or motion of the user device maybe obtained using an IMU, such as the IMU 236 shown in FIG. 2. The IMU 236 may be enabled for this purpose by the processor 201 or by the camera control unit 234 upon initiating the one or more cameras 230 and one or more microphones 232 via an application as mentioned.

For example, the camera control unit 234 may comprise within a memory a set of reference inertial measurement data (IMD) indicative of one or more known recoil forces or motions or a range of known recoil forces or motions. For example, it may be expected that a short-duration, high velocity and backwards force or motion are characteristics of recoil for a firearm. Suitable thresholds may be set for such characteristics. By comparing received IMD from the IMU 236 with the reference IMD, it may be determined if a detected force or motion of the user device correlates with, in this case, a recoil for a firearm. The reference IMD may be determined by real-world testing of one or various types of firearm, which reference IMD may then be stored in a memory of the camera control unit 234.

In some embodiments, one or more machine learning models may be used, taking the received IMD as input data and, based on the training of the machine learning model(s), an output may be generated indicating whether or not the predetermined force or motion is detected.

In terms of the first sub-operation 402 of FIG. 3B involving detection of one or more predetermined visual and/or audio elements, some examples will now be described.

For example, the one or more predetermined visual elements may represent one or more of at least part of a firearm, a flash or explosion and one or more people running.

Referring to FIG. 4A, a first frame 402A of a series of frames of video data is shown, as captured by a camera of a user device, e.g. the one or more cameras 230 of the apparatus 200 shown in FIG. 2.

The first frame 402A depicts, in the image data, outwardly extending arms 410 of a user of the apparatus 200, a real-world object 412 in the hands of the user, and a crowd of people 414 in the distance.

The apparatus 200, particularly the camera control unit 234, maybe configured to perform object recognition analysis of video data corresponding to the first frame 402A in order to identify the one or more predetermined visual elements.

For example, the camera control unit 234 may perform object recognition analysis of any known type by segmenting pixels of the first frame 402A into regions. This may involve determining pixel values and grouping together pixels having the same or closely-similar values.

The camera control unit 234 may then attempt to predict or estimate a real-world object or objects for one or more of the regions. This may involve inputting a dataset describing or characterising the one or more regions into a machine learning model. The machine learning model may be trained to classify the one or more regions as particular objects, e.g. a firearm, a game controller, etc. or simply to return a positive result if the object is considered to correspond to a target object, e.g. a firearm. An output maybe generated indicative of the classification or as a positive or negative result.

In terms of the training of the machine learning model, training images which show at least part of a firearm, and in particular one or more rear views of at least part of a firearm, may be employed in the training stage to provide more useful results. This is the most-likely orientation of a firearm or other real-world object that will be captured by the one or more cameras 230 of the apparatus 200.

If the output is indicative of a predetermined real-world object, in this case a firearm, then the camera control unit 234 may perform its control operation 306 if synchronized to a detected predetermined force or motion of the apparatus 200.

Referring to FIG. 4B, a second frame 402B of the series of frames of the video data is shown.

The second frame 402B depicts, in the image data, and additional to what is depicted in the first frame 402A, an explosion or flash 416 that emanates from the real-world object 412.

Similar to the above, for example using the same, or a different machine learning model, the camera control unit 234 maybe configured to perform object recognition analysis of video data corresponding to the second frame 402A in order to identify the explosion or flash. Training images may be employed which show explosions or flashes resulting from the firing of firearms.

If the output is indicative of an explosion or flash resulting from the firing of a firearm, then the camera control unit 234 may perform its control operation 306 if synchronized to a detected predetermined force or motion of the apparatus 200.

Referring to FIG. 4C, a third frame 402C of the series of frames of the video data is shown.

The third frame 402C depicts, in the image data, and additional to what is depicted in the second frame 402B, that members of the crowd of people 414 have changed position.

Similar to the above, for example using the same, or a different machine learning model, the camera control unit 234 maybe configured to perform object recognition analysis of video data corresponding to the third frame 402C. This may be in order to identify that members of the crowd of people 414 have changed position compared with the first and/or second frames 402A, 402B. If the rate of change corresponds with an estimated speed above a predetermined threshold, e.g. above 4 m/s (which may indicate a running speed), the camera control unit 234 may perform its control operation 306 if synchronized to a detected predetermined force or motion of the apparatus 200.

Another condition may be based on the direction that respective members of the crowd of people 414 move; if one or a minimum number of the people move away from the position of the apparatus 200 then this may additionally, or alternatively, trigger the control operation 306. The position of the apparatus 200 may be coarsely estimated based on the central position of the relevant frame.

Note that detection of only one of the above visual elements may be sufficient to trigger the control operation 306 if synchronized to the detected predetermined force or motion of the apparatus 200.

Referring to FIG. 4A, for example, the absence of an explosion or flash from the firearm does not necessarily mean that the firearm has not been fired; the orientation of the firearm and/or the relative position of the user's hands, arms or body may conceal any such an explosion or flash.

On the other hand, there is less chance of a false positive result if two or more of the visual elements are required in combination, or indeed if one or more visual elements are combined with one or more predetermined audio elements to be described below.

For example, a toy gun or a gun used in playing a computer game may trigger the control operation 306 if considered alone; however, no explosion or flash will be produced. Hence, making detection of an explosion or flash another condition and/or detecting that members of the crowd of people 414 are running away, reduces the chances of a false positive result.

Additionally, or alternatively, detection of one or more predetermined audio elements may trigger the control operation 306 if synchronized to the detected predetermined force or motion of the apparatus 200.

The audio elements may represent a sound or sounds associated with one or more of a firing sound of a firearm and speech or vocal sounds having one or more characteristics indicative of distress. For example, the audio elements may represent a sound or sounds associated with speech or vocal sounds having an above-threshold amplitude and/or pitch, which may, for example, transition, over a plurality of the frames, from a baseline amplitude and/or pitch to the above-threshold amplitude and/or pitch relative to the baseline

FIGs. 5A - 5C indicate in visual representation sounds captured by the one or more microphones 232 of the apparatus 200, at times corresponding to capture of the first to third frames 402A - 402C.

For example, FIG. 5A indicates that one or more keywords (or phrases) 502 may be detected at a time corresponding to capture of the first frame 402A. For example, keywords or phrases such as "gun", "I'm going to shoot" or similar are examples of predetermined audio elements. Keywords or phrases indicative of distress may also be used. For example, FIG. 5B indicates that a firing sound, or bang 504, will likely be captured when the firearm is fired. This is another example of a predetermined audio element. FIG. 5C indicates that screaming sounds 506 are another example of a predetermined audio element.

Note that detection of only one of the above predetermined audio elements 502, 504, 506 may be sufficient to trigger the control operation 306 if synchronized to the detected predetermined force or motion of the apparatus 200. For the same reasons as mentioned above, it may be preferable to require a combination of two or more of the predetermined audio elements 502, 504, 506 and/or to require a combination of one or more of the predetermined audio elements with one or more of the predetermined video elements, in order to trigger the control operation 306.

Conventional audio analysis methods may be used for detecting the predetermined audio elements such as keywords, phrases, firing sounds and screaming sounds 502, 504, 506. This may employ use of one or more machine learning models which is or are trained to classify received audio data (from the video data). The training data could, for example, comprise audio data corresponding to a plurality of known keywords, phrases, firing sounds and screaming sounds.

FIG. 6 is a schematic view of the camera control unit 234 according to one or more example embodiments. The camera control unit 234 maybe implemented in hardware, software, firmware or a combination thereof.

In the shown embodiment, a first machine learning model 602 is provided for receiving video data from the one or more cameras 230 representing a series of frames captured by the camera(s). The first machine learning model 602 may be trained on training images depicting, at least in part, one or more predetermined visual elements such as firearms, explosions or flashes and/or people running away from the centre of the images or similar.

A separate machine learning model may be provided for each type of visual element, or a single machine learning model may be provided for a finite number of visual element types. A second machine learning model 604 is provided for receiving audio data (referred to above in combination with the video data) from the one or more microphones 232. The second machine learning model 604 may be trained on audio data representing, at least in part, one or more predetermined audio elements such as one or more keywords or phrases, firing sounds or bangs and/or the noises of people in distress, e.g. screaming. A separate machine learning model may be provided for each type of audio element, or a single machine learning model may be provided for a finite number of audio element types. A third machine learning model 606 is provided for receiving IMD from the IMU 236. The third machine learning model 606 may be trained on IMD representing, at least in part, one or more examples of recoil forces or motions or a range of known recoil forces or motions.

A decision logic module 608 is provided for determining, based on the received outputs from at least one of the first and second machine learning models 602, 604, and the third machine learning model 606, whether or not to perform the controlling operation 306 mentioned above with regard to FIGs. 3 and 4. That is, the decision logic module 608 is set to determine which combination of visual and/or audio elements, synchronized with detecting the predetermined recoil force or motion on the apparatus 200, results in controlling the apparatus to prevent transmission of, and/or to tag, at least some of the video data responsive to identifying the event of interest.

For example, the decision logic module 608 may determine that occurrence of visual elements which comprise at least part of a firearm and a flash or explosion, and an audio element which comprises a firing sound of a firearm, are the minimum number of elements needed to trigger the controlling operation 306. Other combinations are possible.

In terms of what the controlling operation 306 may comprise, the following examples are given.

First, to prevent transmission of at least some of the video data, which may be the video data captured at and after the detection, at least for a predetermined time period, the video data may simply not be captured; for example the one or more cameras 230 may simply be deactivated. Additionally, or alternatively, an image encoding function of the apparatus 100 may be deactivated, for example to prevent encoding of the received frames for transmission over a wireless channel or video stream. Additionally, or alternatively, a data transmission function of the apparatus 100 may be deactivated, i.e. the network interface 210 is switched off and/or a video streaming channel paused or stopped. Additionally, or alternatively, the received frames may be obfuscated or scrambled using a scrambler 610. This may enable video data to be transmitted but it is not that video data which is captured because it has been obfuscated or scrambled; in this sense, the original video data is prevented from being transmitted. However, the video data may be stored and, once the apparatus 100 is with law enforcement officers, it may be possible to descramble the video data for evidential purposes.

As already mentioned, another option is to tag at least some of the video data so that it can subsequently be identified as comprising the event of interest. The tagging may comprise any suitable form or format, for example inserted metadata indicative of the presence of the event of interest in the video data and, possibly, one or more timestamps indicative of the time the event of interest was detected.

Another option that may occur upon detecting an event of interest is to alert law enforcement officers. This may involve the apparatus 100 sending an automated message to, for example, a police call centre upon detecting an event of interest, possibly also providing in the message a location of the apparatus 100 based on Global navigation satellite system (GNSS) or similar receiving functionality.

The controlling operation 306 may be a temporary one, for example one that lasts for a predetermined time frame, e.g. 30 minutes. After the predetermined time frame, normal operation may be resumed and/or a further check may be performed to determine if the one or more predetermined visual and/or audio elements are still present.

Any continuation of the event of interest may cause continuation of the controlling operation 306.

### Example Apparatus

FIG. 7 shows an apparatus according to some example embodiments. The apparatus may comprise the camera control unit 234 as shown in FIG. 2 which may be an embedded apparatus different from, and harder to modify, than the other circuit modules in FIG. 2.

The apparatus may be configured to perform the operations described herein, for example operations described with reference to any disclosed process such is described with reference to FIGs 3 and 4. The apparatus comprises at least one processor 700 and at least one memory 701 directly or closely connected to the processor. The memory 701 includes at least one random access memory (RAM) 701a and at least one read-only memory (ROM) 701b.

Computer program code (software) 705 is stored in the ROM 701b. The apparatus may be connected to a transmitter (TX) and a receiver (RX). The apparatus may, optionally, be connected with a user interface (UI) for instructing the apparatus and/or for outputting data. The at least one processor 700, with the at least one memory 701 and the computer program code 705 are arranged to cause the apparatus to at least perform at least the method according to any preceding process.

FIG. 8 shows a non-transitory media 800 according to some embodiments. The non-transitory media 800 is a computer readable storage medium. It may be e.g. a CD, a DVD, a USB stick, a blue ray disk, etc. The non-transitory media 800 stores computer program code, causing an apparatus to perform the method of any preceding process for example as disclosed in relation to the flow diagrams of FIGs. 3 and 4 and related features thereof.

Names of network elements, protocols, and methods are based on current standards. In other versions or other technologies, the names of these network elements and/or protocols and/or methods may be different, as long as they provide a corresponding functionality. For example, embodiments may be deployed in 2G/3G/4G/5G networks and further generations of 3GPP but also in non-3GPP radio networks such as WiFi.

A memory may be volatile or non-volatile. It may be e.g. a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus, the apparatus comprising means for:
receiving video data representing a series of frames captured by a camera of, or associated with, a user device;
identifying an event of interest in the video data based on:
detecting, for at least one of the frames, one or more predetermined visual and/or audio elements associated with use of a real-world object, and
detecting a predetermined force and/or motion of the user device synchronised with the capture of the at least one frame, the predetermined force and/or motion being associated with use of the real-world object; and
controlling the user device to prevent transmission of, and/or to tag, at least some of the video data responsive to identifying the event of interest.

2. The apparatus of claim 1, wherein the one or more predetermined visual and/or audio elements are associated with use of a firearm and the predetermined motion of the user device corresponds to a recoil motion of the firearm when fired.

3. The apparatus of claim 2, wherein the one or more predetermined visual elements represent one or more of:
at least part of a firearm;
a flash or explosion; and
one or more people running.

4. The apparatus of claim 3, wherein the one or more predetermined visual elements comprise a representation of at least part of a rear view of a firearm.

5. The apparatus of claim 3 or claim 4, wherein the one or more predetermined visual elements comprise a representation of one or more people running at above a predetermined speed over a plurality of the frames and/or in respective directions away from a position of the user device.

6. The apparatus of any of claims 2 to 5, wherein the one or more predetermined audio elements represent a sound or sounds associated with one or more of:
a firing sound of a firearm; and
speech or vocal sounds having one or more characteristics indicative of distress.

7. The apparatus of claim 6, wherein the one or more predetermined audio elements comprise a representation of a sound or sounds associated with speech or vocal sounds having an above-threshold amplitude and/or pitch.

8. The apparatus of claim 7, wherein the one or more predetermined audio elements comprise a representation of a sound or sounds associated with speech or vocal sounds which transition, over a plurality of the frames, from a baseline amplitude and/or pitch to the above-threshold amplitude and/or pitch relative to the baseline.

9. The apparatus of any of claims 6 to 8, wherein the one or more predetermined audio elements comprise a representation of a sound or sounds associated with speech that includes one or more predetermined words indicative of distress.

10. The apparatus of any preceding claim, further comprising one or more machine-learned models for receiving the video data and for processing the video data to detect the one or more predetermined visual and/or audio elements associated with use of a real-world object.

11. The apparatus of any preceding claim, wherein the controlling means is configured to prevent transmission of at least some of the video data by one or more of:
deactivating the camera of the user device;
deactivating an image encoding function of the user device;
deactivating a data transmission function of the user device; or
obfuscating or scrambling at least some of the video data which includes the event of interest.

12. The apparatus of any preceding claim, wherein the apparatus is configured to live-stream the video data to one or more remote devices using a real-time streaming protocol and the controlling means is configured to prevent transmission of at least some of the video data by stopping or pausing the live-stream.

13. The apparatus of any preceding claim, wherein at least the identifying and controlling means comprise at least part of an embedded system of the user device which is configured to activate responsive to activation of the camera.

14. The apparatus of any preceding claim, wherein the apparatus comprises the user device.

15. A method, the method comprising:
receiving video data representing a series of frames captured by a camera of, or associated with, a user device;
identifying an event of interest in the video data based on:
detecting, for at least one of the frames, one or more predetermined visual and/or audio elements associated with use of a real-world object, and
detecting a predetermined force and/or motion of the user device synchronised with the capture of the at least one frame, the predetermined motion being associated with use of the real-world object; and
controlling the user device to prevent transmission of, and/or tagging, at least some of the video data responsive to identifying the event of interest.
